# EUROPÄISCHE PATENTSCHRIFT

(11) **EP 1 570 291 B1**
(45) Veröffentlichungstag und Bekanntmachung des Hinweises auf die Patenterteilung: **27.12.2006**
(21) Anmeldenummer: 03788994.6
(22) Anmeldetag: 31.10.2003
(51) Int. Cl.: G01S 7/00

(54) **VERFAHREN UND ANORDNUNG F R MULTISTATISCHE NACHDISTANZRADARM ESSUNGEN**
MULTISTATIC METHOD AND DEVICE FOR RADAR MEASURING A CLOSE DISTANCE
PROCEDE ET DISPOSITIF POUR DES MESURES RADAR DE DISTANCE PROCHE MULTISTATIQUES

(30) Priorität: 08.11.2002 DE 10252091
(43) Veröffentlichungstag der Anmeldung: 07.09.2005
(73) Patentinhaber: SIEMENS AKTIENGESELLSCHAFT, 80333 München (DE)
(72) Erfinder: HEIDE, Patric, 85591 Vaterstetten (DE); VOSSIEK, Martin, 31139 Hildesheim (DE)
(86) Internationale Anmeldenummer: PCT/EP2003/012188
(87) Internationale Veröffentlichungsnummer: WO 2004/042419

(56) Entgegenhaltungen:
- GB-A- 2 251 149
- US-A- 4 132 991
- US-A- 4 521 778
- US-A- 5 471 211
- US-A- 5 818 371
- US-A1- 2002 075 178
- US-B1- 6 278 400

## Beschreibung

Die Erfindung betrifft ein Verfahren und eine Anordnung für multistatische Nahdistanzradarmessungen.

Die Verfahren und Anordnungen zum Aufbau und Betrieb von Pulsradarsensoren existieren in vielfältiger Form und sind seit langem z.B. aus [1], [2] und [3] bekannt. Eingesetzt werden Pulsradar-Sensoren als Füllstandsensoren in der industriellen Messtechnik, als Einparkhilfe oder Nahdistanzsensor in Kraftfahrzeugen zur Kollisionsvermeidung, zur Abbildung der Umgebung und zur Navigation von autonomen Fahrzeugen und Transportsystemen wie z.B. Roboter und Förderanlagen. Üblicherweise arbeiten Pulsradar-Sensoren in den aufgeführten Anwendungsgebieten bei Mittenfrequenzen von ca. 1 GHz bis 100 GHz mit typischen Pulslängen von 200 ps bis 2 ns. Wegen der großen Messbandbreite werden derartige Sensoren seit einiger Zeit als Ultrawideband (UWB)-Radar bezeichnet. Gemeinsam ist fast allen Pulsradar-Sensoren, dass ihre Messsignale eine so große Bandbreite aufweisen, dass die Signale mit üblichen Technologien nicht direkt aufzunehmen und zu verarbeiten sind. Aus diesem Grund verwenden fast alle bekannten Systeme sog. sequentielle Abtastsysteme. Bei dem sequentiellen Abtastprinzip, welches schon aus frühen digitalen Abtastoszilloskopen bekannt ist, wird das Messsignal über mehrere Messzyklen durch Verschiebung der Abtastzeitpunkte sequentiell abgetastet.

Schaltungstechnische Lösungen für Pulsradare sind beispielsweise aus dem oben genannten Stand der Technik bekannt. GB-A-2 251 149 offenbart eine derartige Anordnung und Verfahren zum multistatischen Nahdistanzradarmessen. Der Stand der Technik beschreibt einen Sendeimpuls mit einer bestimmten Wiederholfrequenz CLK-Tx (Clock-Transmission), welcher ausgesendet wird und das reflektierte Empfangssignal mit einem Abtastor mit einer Wiederholfrequenz CLK-Rx (Clock-Reception) abgetastet wird. Unterscheiden sich die Frequenzen der Sendefolge von der der Abtastfolge geringfügig, so verschieben sich die beiden Folgen langsam in ihrer Phase gegeneinander. Diese langsame relative Verschiebung des Abtastpunktes zum Sendezeitpunkt bewirkt einen sequentiellen Abtastvorgang.

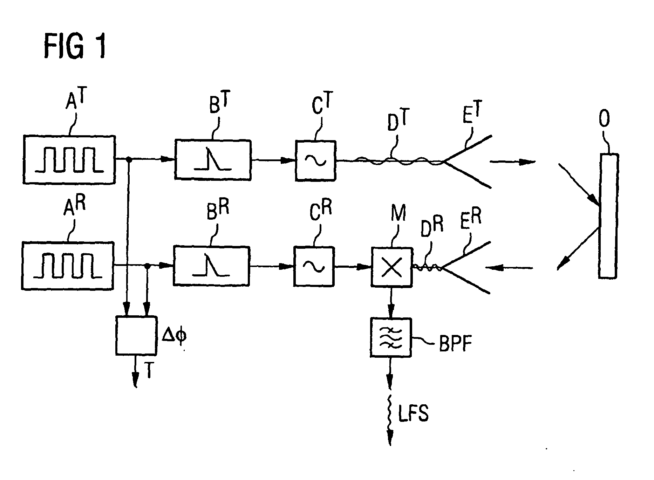

**Figur 1** zeigt eine bekannte Ausführungsform eines nach der oben beschriebenen Art arbeitenden Pulsradars. In einer Sendeeinheit erzeugt ein Sendetaktgenerator A^{T} erzeugt eine Taktfrequenz CLK-Tx, mit der ein Pulsgenerator B^{T} zyklisch kurze Spannungspulse erzeugt. Mit diesen kurzen Pulsen wird anschließend ein Hochfrequenzoszillator C^{T} eingeschaltet und erzeugt während der Einschaltdauer hochfrequente Schwingungen, die als Sendesignal D^{T} über die Antenne E^{T} ausgesendet werden. Eine identische Pulsgeneratorkette wird in einem Empfangszweig, oder in einer Empfangseinheit mit den entsprechenden Elementen A^{R}, B^{R} und C^{R} aufgebaut. Das Pulssignal aus dem Oszillator C^{R} wird auf einen Mischer M gegeben, der somit auch als Abtastor fungiert, da der Mischer von der anderen Seite auch mit dem Empfangssignal D^{R} gespeist wird. Die Signalanteile vom Sendesignal D des Sendezweigs, die an einem Objekt O reflektiert und als Empfangssignal D^{R} wieder zurück zur Empfangsantenne E^{R} gelangen, werden durch den Mischer M mit dem Signal aus C^{R} von einem niederfrequenten Basisband gemischt. Die dadurch erzeugte Abtastimpulsfolge wird durch ein Bandpassfilter BPF geglättet und ergibt so letztendlich das Messsignal LFS (i.d.R. Low Frequency Signal).

Zur Erzielung eines guten Signal-zu-Rauschverhältnisses (SNR) des Messsignals ist entscheidend, dass die Oszillatoren C^{T} und C^{R} über alle Pulse in einer Folge in einem deterministischen, also in einem nicht stochastischem, Phasenverhältnis zueinander stehen. Ein solcher deterministischer Zusammenhang der durch C^{T} und C^{R} erzeugten Pulse ist nicht ohne weiteres zu erreichen, da C^{T} und C^{R} voneinander getrennt arbeiten. Ein deterministischer Zusammenhang ergibt sich jedoch, wenn die Pulssignale, die Pulsgeneratoren B^{T} und B^{R} einschalten, so beschaffen sind, dass sie Oberwellen erzeugen, die im Frequenzband der Hochfrequenzoszillatoren C^{T} und C^{R} liegen. Die Oberwellen führen dazu, dass die Oszillatoren C^{T} und C^{R} beim Einschalten nicht stochastisch anschwingen, sondern kohärent zu den Oberwellen der Signale B^{T} und B^{R} eingeschaltet werden. Da die Signale und Oberwellen von den Pulsgeneratoren B^{T} und B^{R} bei jedem Einschaltvorgang immer gleich sind, schwingen C^{T} und C^{R} jeweils immer mit einer charakteristischen festen Anfangsphase an, also dass ihre Signale in einem deterministischen, durch die Sendesignalfolge und die Abtastsignalfolge vorgegebenen Phasen- und Zeit-Verhältnis zueinander stehen.

Verfahren zur Gewährleistung des deterministischen Zusammenhangs der Sende- und Abtastpulse sind aus dem Stand der Technik bekannt, wobei in der Regel ein einzelner kontinuierlich arbeitender Festfrequenzoszillator verwendet wird, aus dem mit Hilfe von Schaltern die benötigten Pulse abgeleitet werden. Es ist auch bekannt, anstatt getrennter Antennen wie E^{T} und E^{R}, ebenso eine gemeinsame Antenne zum Senden und Empfangen zu verwenden, wobei die Sende- und Empfangssignale beispielsweise durch einen Richtkoppler voneinander getrennt werden.

Es wird aber in vielen Anwendungen bevorzugt, dass mit einem Radarsensor Entfernungen nicht nur eindimensional gemessen werden, sondern dass Objektszenen mehrdimensional abgebildet werden können. Für beispielsweise dreidimensionale Szenenabbildungen und dabei akkurate Entfernungsbestimmungen zu dem Objekt werden die Sensoren bzw. deren Messrichtungen entweder bewegt und nacheinander Messungen an unterschiedlichen Orten bzw. in unterschiedlicher Richtung durchgeführt, und/oder Systeme mit mehreren räumlich verteilten Sensoren verwendet. Solche Systeme sind beispielsweise aus [4] unter dem Begriff "Multistatische Sensorsysteme" bekannt. Bei multistatischen Systemen mit mehreren räumlich verteilten Sendern und Empfängern ist es vorteilhaft, dass jeweils einer der Sender ein Signal aussendet, das an der Objektszene reflektiert wird und dann von allen Empfängern detektiert wird. Bei solchen Anordnungen und deren Betriebsart ergibt sich allerdings der Nachteil, dass räumlich verteilte Sende- und Empfangszweige üblicherweise nur sehr aufwendig derart miteinander zu koppeln sind, dass die Phasen ihrer Hochfrequenzsignalquellen in einem deterministischen Verhältnis zueinander stehen.

Wie oben bereits beschrieben, ist ein deterministischer Phasenbezug eine Grundvoraussetzung zur Erzielung eines guten Signal-zu-Rauschverhältnisses. Hochfrequenzsignale aus einer gemeinsamen Quelle abzuleiten und über Hochfrequenzleitungen räumlich zu verteilen, ist allerdings insbesondere für kommerzielle Applikationen nachteilig, da sehr hohe Kosten und Signaldämpfungen sowie Dispersionen der übertragenen Signale verursacht werden. Aus ähnlichen Gründen scheiden in aller Regel Phasenregelkreise zur Kopplung mehrerer Oszillatoren aus.

Somit liegt der vorliegenden Erfindung die Aufgabe zugrunde, eine kostengünstige, multistatische Anordnung und ein Verfahren anzugeben, womit eine genaue Entfernungsmessung erreichbar ist.

Die Aufgabe wird durch die Merkmale der jeweiligen unabhängigen Ansprüche gelöst.

Die Multistatische Sensoranordnung für eine Entfernungsmessung zu einem Objekt weist eine Sende- (Tn) und eine Empfangseinheit (Rm) auf, welche jeweils mindestens einen Hochfrequenzoszillator (HFO-Tn, HFO-Rm) und mindestens einen Pulsgenerator (PG-Tn, PG-Rm) aufweisen. Die Pulsgeneratoren (PG-Tn, PG-Rm) sind mit Taktsignalen (TS, RS) aus Signalgeneratoren speisbar, wobei die Taktsignale (TS, RS) über einen gemeinsamen Datenbus (B) an die Sende- (Tn) und die Empfangseinheit (Rm) übertragbar sind, wodurch ein deterministisches Phasenverhältnis der Hochfrequenzsignale aus den Hochfrequenzoszillatoren (HFO-Tn, HFO-Rm) erzeugbar ist.

Die Taktsignalen weisen dabei ein festes Frequenzverhältnis auf, welches aus dem Zustand des Taktgenerators bekannt ist.

Die Verbindung des Pulsgenerators PG-Tn der Sendeeinheit Tn zum Datenbus B erfolgt vorzugsweise über eine Schaltung Swn, so dass die Aktivierung der Sendeeinheiten von der Steuereinheit kontrolliert werden kann. Die Verbindung des Datenbusses B zu den Empfangseinheiten kann ebenfalls über eine Schaltung erfolgen.

Beim Verfahren zum Betrieb der obigen Sensoranordnung werden zwei Taktsignale über einen gemeinsamen Datenbus B jeweils in eine Sende- und in eine Empfangseinheit eingespeist, und das Signal von einer Sendeeinheit zu einem Objekt ausgestrahlt und das vom Datenbus B erhaltene und durch die Empfangseinheit Rm passierte Signal mit dem vom Objekt 0 reflektierten Empfangssignal gemischt um daraus ein auswertbares Messsignal zu erzeugen, wobei eine Kalibrierung eines Messsignals an einer Entfernungsachse anhand einer Nullpunktbestimmung der Taktsignale auf dem gemeinsamen Datenbus ausgeführt wird, welche die Phasen zweier Taktsignale über den Datenbus vergleicht.

Unter Entfernungsachse wird die Achse verstanden, welche den Verlauf der Messkurve einer Entfernungsmessung gegenüber Zeit bildet.

Es ergibt sich insbesondere der Kostenvorteil, dass die Aperturelemente der Vorrichtung nicht hochfrequenzmäßig verbunden sein müssen. Die Hochfrequenzoszillatoren jeweils der Sende- und der Empfangseinheiten müssen also nicht mehr miteinander verbunden sein.

Die Erfindung wird zunächst anhand der folgenden Ausführungsbeispiele näher erläutert. Dabei zeigt
- **Figur 2**: eine erfindungsgemäße multistatische Anordnung und
- **Figur 3**: die Verwendung der nach Figur 2 vorgeschlagenen Anordnungen in einem Kraftfahrzeug für eine Einparkhilfsfunktion und
- **Figur 4**: ein Aufbauschema für die in den vorgeschlagenen Anordnungen verwendete Empfangseinheit.

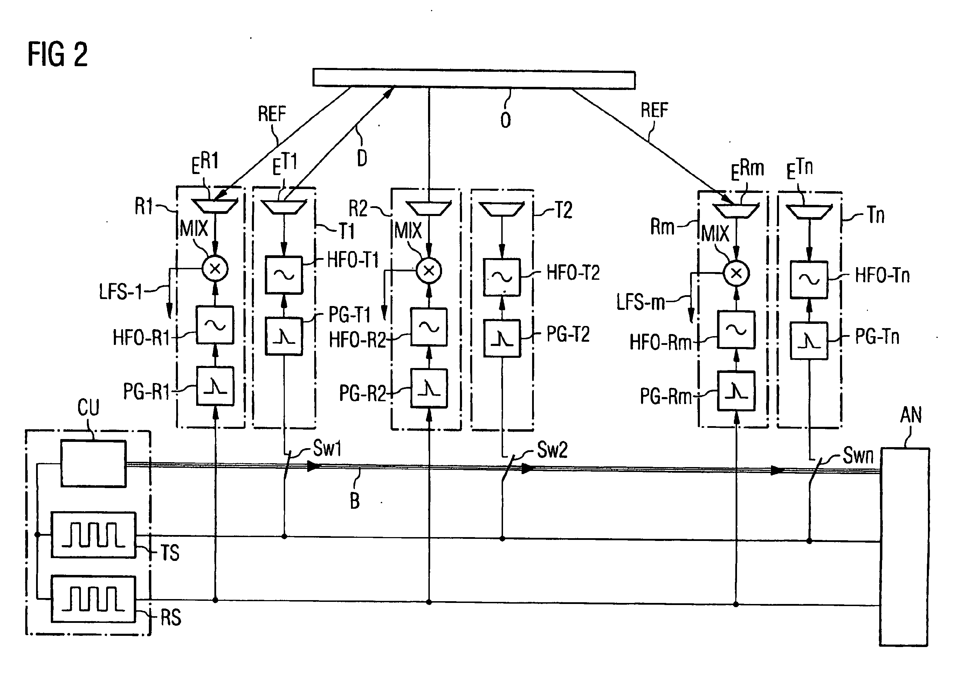

Die multistatische Anordnung nach **Figur 2** besteht aus n und m Empfangs- und Sendeeinheiten (jeweils R1, T1 bis Rm, Tn), welche auch als Empfangs- oder Sendezweige bezeichnet werden. Ein zentrales Element dieses Aufbaus ist der Datenbus B, auf dem die Signale A^{T} und A^{R} gemäß Figur 1 übertragen werden. Über diesen Datenbus werden alle n und m Sende- und Empfangszweige also mit den Taktsignalen RS und TS gemäß Figur 2 versorgt. Mit Multiplexerschaltungen, Sw bis Swn, kann über eine Steuereinheit CU jeweils einer der n Sendezweige T1 bis Tn als momentaner aktiver Sender ausgewählt werden. Empfangen können dabei jeweils alle m Empfangszweige parallel.

Es wird insbesondere bevorzugt, dass die multistatische Sensoranordnung n Sendeeinheiten Tn und m Empfangseinheiten Rm aufweist, wobei n und m jeweils ganze Zahlen größer oder gleich 1 sind und die Einheiten
- mindestens einen Hochfrequenzsignaloszillator (HFO-Tn, HFO-Rm),
- mindestens einen Pulsgenerator (PG-Tn, PG-Rm),
- und mindestens eine Antenne (E^{Tn}, E^{Rm})
aufweisen und die Sendeeinheit Tn mit einem von einer ersten Taktquelle TS erzeugten Taktsignal einspeisbar ist und die Empfangseinheit Rm einen Mischer MIX aufweist und von einem aus einer zweiten Taktquelle RS erzeugten Taktsignal und von einem von einer Empfangsantenne E^{Rm} empfangenen Signal einspeisbar ist und beide Einheiten (Tn, Rm) mit einer Steuereinheit CU verbunden sind. Dabei sind die Pulsgeneratoren (PG-Tn, PG-Rm) an einem gemeinsamen Datenbus B verbunden, wodurch auch die Sende- und Empfangseinheiten über den Datenbus B mit jeweiligen Taktsignalen speisbar sind. Durch die gemeinsamen Taktsignalen über den Datenbus B wird ein deterministisches Phasenverhältnis der Hochfrequenzsignale aus den Hochfrequenzoszillatoren (HFO-Tn, HFO-Rm) der Einheiten erreicht.

Im folgenden wird nun ein vorteilhaftes Modulkonzept vorgestellt, mit dem besonders kostengünstig beliebige bi- und multistatische Pulsradarsensoren realisiert werden kann. Ein Chipsatz besteht aus 2 Elementareinheiten, einer Sendeeinheit Tn und einer Empfangseinheit Rm. Die Einheiten umfassen die folgenden Komponenten bzw. Funktionen:
- Eine Sendeeinheit Tn besteht aus: einem HochfrequenzOszillator HFO-Tn, einem Steuerpuls-Oszillator PG-Tn, und ggf. einem Filter HF-FLT (nicht dargestellt) vor dem Antennenausgang E^{Tn} der dafür sorgt, dass das ausgesendete Signal konform zu den anzuwendenden Zulassungsbestimmungen (z.B. für die Vereinigten Staaten FCC 15.3) ist, und ggf. eine integrierte keramische Antenne E^{Tn}.
- Die Empfangseinheit besteht aus: einem HochfrequenzOszillator HFO-Rm, einem Steuerpuls-Oszillator PG-Rm, einen Mischer MIX und ggf. einen rauscharmen Verstärker, einem Abstandshalteglied, und ggf. einen Bandpassfilter (nicht dargestellt), das dem Mischer direkt nachgeschaltet ist und ggf. einem Filter HF-FLT hinter dem Antennen-Eingang E^{Rm} der nicht interessierende bzw. störenden Signale unterdrückt und ggf. eine integrierte keramische Antenne E^{Rm}.

Die Taktquellen TS und RS für die Empfangs- und Sendeeinheiten werden dabei vorzugsweise von einer gemeinsamen Steuereinheit CU kontrolliert.

Die Sende- und Empfangssignale aus den jeweiligen Einheiten können selbstverständlich kodiert sein.

Das Verfahren einer kompletten Messung findet derart statt, dass zunächst eine Sendeeinheit T1 von einer Steuereinheit CU als aktiver Sendezweig ausgewählt, bzw. von einer Multiplexer-Schaltung Sw über den Datenbus B freigeschaltet wird. Dieser Sender erzeugt wie in Figur 1 dargestellt Sendesignale D^{T}. Diese Signale werden beispielsweise von einem Objekt O reflektiert und mit dem in der Beschreibungseinleitung beschriebenen sequentiellen Abtastschema von allen m Empfangszweigen R1 bis Rm parallel empfangen. Infolge wird dieselbe Messprozedur für alle weiteren n Sendezweige wiederholt. Befinden sich z.B. alle Sende- und Empfangsantennen E^{Tn} und E^{Rm} an unterschiedlichen Positionen, ergeben sich bei n Sende- und Empfangszweigen n*m nichtreziproke Messwege, also signifikant mehr als beim Betrieb von n oder m konventionellen mono- oder bistatischen Radarsensoren, bei dem sich nur n oder m Messwege ergeben würden. Wird also jeweils eine gemeinsame Antenne E für einen Sende- und Empfangszweig genommen, so ergeben sich immerhin noch die kummulierte Summe von 1 bis n (d.h. n + (n-1)+(n-2) + ... + 1) nichtreziproken Messwege. Die Anzahl der Sende- und Empfangszweige kann dabei auch unterschiedlich sein, d.h. n ist ungleich m.

Entscheidend allerdings für den Umfang der erzielbaren Messinformation ist die Gesamtzahl von n Sendezweigen + m Empfangszweigen. Dabei sind die Zahlen m und n jeweils eine beliebige ganze Zahl größer oder gleich 1. Mit den gewonnenen Messwegen kann rechnerisch z.B. mit bekannten Triangulationsverfahren oder Holographie- bzw. Tomographiealgorithmen eine zwei- oder dreidimensionale Objektszene rekonstruiert werden und die Entfernung zum Objekt berechnet werden.

Für den optimalen Betrieb der gesamten Sensoranordnung und zum Erreichen eines genauen Messverfahrens wird vorzugsweise ein Nullpunkt bei der Entfernungsmessung bestimmt. Der Nullpunkt ist der Zeitpunkt, an dem die Flanken der Signale aus HFO-Tn eines Sendezweigs Tn und HFO-Rm eines Empfangszweiges Rm exakt miteinander in Phase sind. Unter Flanke wird beispielsweise eine definierbare Anzahl von Perioden eines Signals vor einem Signalende verstanden.

Es ist vorteilhaft, wenn der Phasenvergleich zwischen den Signalen aus TS und RS an einem Punkt entlang des Datenbusses B geschieht, da hier die Signale phasenverschoben werden. Die Offsets können danach rechnerisch kompensiert werden. Der Phasenvergleich zur Detektion des Nullpunktes kann mit üblichen Phasenkomparatoren wie in Figur 1 mit Δφ gezeigt, z.B. mittels eines FLIP-FLOPs, erfolgen, wobei die Länge der Kabel des Datenbusses und deren Totzeit zur Wissensbasis des Messverfahrens gehören. Eine Auswerteeinheit zum Vergleich der Phasen würde optimal direkt am Datenbus B verbunden sein oder Bestandteil der Steuereinheit CU sein.

Der Nullpunkt kann zudem auch durch Verschiebungen der Taktflanken aus TS und RS, welche durch Temperatur und alterungsbedingten Fehlern der Signalleitungen hervorgerufen werden können, falsch definiert werden. Insbesondere wird also bei der Auswahl der Leitungsart des Datenbusses bevorzugt, dass die Flanken der Triggersignale aus TS und RS über dem gesamten Datenbus möglichst gleich gehalten werden, welches aufgrund der geringen Taktfrequenzen (typisch 100 kHz bis 10 MHz) auch verhältnismäßig einfach realisierbar ist. Eine Synchronisierung von Triggerflanken bei höheren Frequenzen ist im Gegensatz dazu problematisch, da eine Phasenverschiebung von hochfrequenten Signale lediglich durch einen sehr kleinen Startzeitunterschied der Signale oder durch eine geometrische Änderung des Datenbusses wesentlich verstärkt wird. Eine geringere Taktfrequenz ist also von Vorteil. Demgemäß wird der Datenbus B optimal mit einem Anpassnetzwerk AN abgeschlossen. Solche Anpassnetzwerke, mit Widerstandswerten von ca. 50 Ohm, sind aus dem Stand der Technik bekannt.

Um eine höhere Genauigkeit des Messverfahrens zu erreichen, wird z.B. ein Taktsignal aus TS oder RS über den Datenbus B hin- und zurück oder zumindest über unterschiedlich lange Wege übertragen. Der Vergleich mit dem ursprünglichen Taktsignal liefert ein Korrekturmaß, bzw. ein Wert um das Messverfahren zu kalibrieren. Bei jeder Kalibrierung ist dabei eine normaler Messvorgang auszuführen, d.h., die Schaltungen zu den Sendeinheiten werden geschlossen. Dabei könnten die Taktsignale auch an beiden Seiten oder Enden des Datenbussystems eingespeist werden. In diesem Falle werden jeweils zwei direkt aufeinanderfolgende Entfernungsmessungen durchgeführt, wobei bei der ersten Messung die Takte an der einen Seite des Datenbusses und bei der zweiten Messung die Takte an der anderen Seite des Datenbusses eingespeist werden. Somit ergeben sich zwei nahezu identische Echoprofile im Datenbus, die allerdings um einen charakteristischen Offset gegeneinander verschoben sind. Die Größe dieser Verschiebung und der entsprechender Korrekturwert können direkt von der Lage charakteristischer Maxima oder aber auch durch Korrelation der zwei beiden Profile der Messkurven der Entfernungsmessung bestimmt werden. Grundsätzlich können auch beliebige andere Takt-Einspeise-Schemata angewendet werden, wie z.B. derart, dass jede Sende- und Empfangseinheit mit eigenen Taktquellen ausgerüstet ist, welche dann wahlweise den Datenbus mit dem Takt speisen.

Eine weitere Möglichkeit den Nullpunkt zu bestimmten besteht darin, das Signal, welches durch die direkte Querübertragung (d.h. nicht über eine Reflexion, sondern direkt vom Sender zum Empfänger) entsteht, auszuwerten. Dieses Signal ist im Vergleich zu den reflektierten Signalen sehr stark ausgeprägt und daher einfach zu erkennen. Um diese Ausprägung zu verstärken, können die Antennen E^{T} und E^{R} so ausgelegt oder orientiert werden, dass eine ausgeprägte Querübertragung erreichbar ist. Alternativ können Leitungsstrukturen zwischen den Sende- und Empfangszweigen, welche eine Querausbreitung unterstützen, angebracht werden. Das Signal des direkten Übersprechens zwischen Sender und Empfänger ist einfach und direkt zur Kalibrierung des notwendigen Nullpunktes verwendbar.

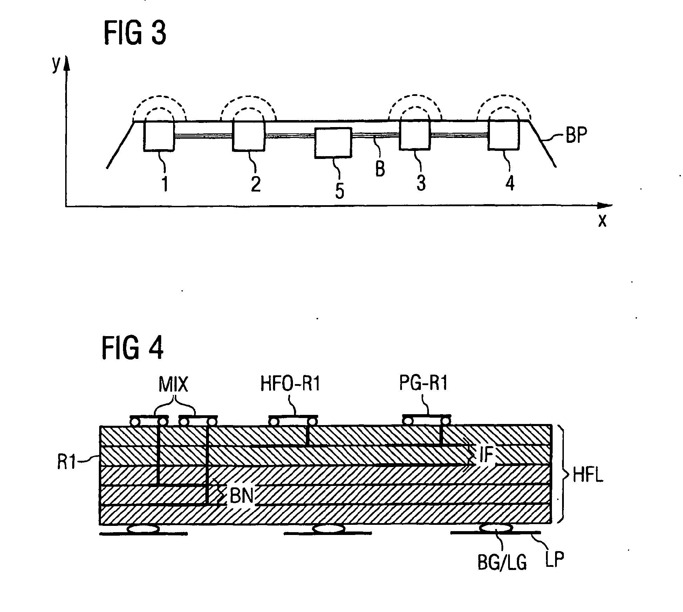

In **Figur 3** ist die erfindungsgemäße Anordnung als Kraftfahrzeug-Einparkradar dargestellt. In dem Stoßfänger des Kraftfahrzeuges BP sind vier Radarsensoren 1 bis 4 angebracht. Die gemeinsame Trigger, Steuer- und Auswerteeinheit 5 speist den Datenbus B, an das die Radarsensoren gekoppelt sind, mit Signalen. Die Antennen der Radarsensoren sind so ausgelegt (siehe Figur 2), dass neben der Hauptabstrahlrichtung y senkrecht zum Stoßfänger auch noch_Signalenergie in Querrichtung x abgestrahlt wird, um die zuvor erwähnte Nullpunktfestlegung per Querübertragung durchführen zu können. Wie schon oben dargestellt wurde, ist es vorteilhaft, die Sende- und Empfangsantennen insbesondere hinsichtlich der Genauigkeit des Messverfahrens in jedem Radarsensor 1 bis 4 räumlich zu trennen.

Zum genaueren Aufbau einer Sende- oder Empfangseinheit wird folgendes ausgeführt:

Üblicherweise werden Hochfrequenzmodule auf Leiterplatten aus organischen Materialien, z.B. Teflon- oder Epoxi-baisiert, aufgebaut. Es ist in der Regel vorteilhaft, wenn die Hochfrequenzbauelemente als möglichst kleine Einheiten hergestellt werden können. Aufgrund der Verkopplung zwischen Wellenlänge und Strukturgröße mit diesen Materialien ist die bevorzugte, kleine Baugröße schwer zu erreichen. Eine Alternative zu solchen Vorrichtungen sind Schaltungen auf Dünnschichtkeramiken, deren Fertigung aber kostenintensiv ist.

Somit lassen sich die Radarmodule bzw. Komponenten der Radarmodule besonders vorteilhaft als LTCC- (Low Temperature Cofired Ceramic/Niedertemperatur-gesinterte Keramik) Module umsetzen. Die Hochfrequenzstrukturen auf LTCC-Basis sind zum einen wegen der relativ großen Dielektrizitätszahl und wegen der Anwendung von Mehrlagentechnik kompakt zu realisieren.

Die Herstellung von LTCC Modulen ist kostengünstig und auch massenfertigungs-tauglich.

Ein bevorzugtes Radarteilmodul, hier als Empfangseinheit realisiert, ist als LTCC-HF-Modul in **Figur 4** dargestellt. Auf dem LTCC-Modul R1 sind beispielsweise ein HochfrequenzOszillator HFO-R1, ein Steuerpulsoszillator PG-R1 zum Anregen des Hochfrequenzoszillators und ein Mischer MIX integriert.

Aus dem LTCC-Modul R1 werden, bis auf den Anschluss einer Antenne E^{R1}, lediglich digitale oder vergleichsweise niederfrequente Signale nach außen geführt (siehe auch Figur 2 LFS-1 bis LFS-m), so dass das Modul R1 problemlos und kostengünstig in die restliche Schaltung integriert werden kann. Wird die Antenne E^{R1} also nicht in die Keramik integriert, ist es sehr vorteilhaft das Modul so aufzubauen, das es direkt auf den Speisepunkt einer Patch- oder Schlitzantenne E^{R1} bestückt werden kann. Eine Patch-Antenne kann dann z.B. als zweilagige Platine aufgebaut werden, wobei die Vorderseite der Platine die Antennenstruktur und ihre Rückseite das LTCC-Modul trägt, wobei diese Seite auch die notwendigen Speiseleitungen und Masseflächen aufweist. Da die LTCC-Module sehr klein sind, ist es zudem auch möglich, ein LTCC-Modul auf die Vorderseite der Antenne direkt auf den Speisepunkt der Antenne zu bestücken, und ggf. in eine Schutz- oder Anpassschicht einzubetten, wobei hier das Antennen-Richtdiagramm nicht wesentlich gestört wird.

Ein bevorzugter Aufbau eines LTCC-Radarmoduls mit dem oben geschilderten Elementen ist ebenfalls in **Fig. 4** dargestellt. Die HF-Schaltung R1 besteht dabei aus mehreren Schichten bzw. HF-Lagen HFL. Auf die Oberseite des LTCC-Substrates werden Bauteile bestückt, die nicht in die inneren Schichten zu integrieren sind, wie z.B. Halbleiter-Elemente, ein Mischer MIX, ein Hochfrequenzoszillator HFO-R1 oder ein Pulsgenerator PG-R1. Als Bestückungstechnik bieten sich insbesondere die für sich bekannten SMT-Bestückung oder Flip-Chip Bestückung an. Das LTCC-Modul selber kann mit sogenannter Ball-Grid oder Land-Grid Technik BG/LG auf einer Standard-Leiterplatte LP montiert werden. Die Integration eines Biasnetzwerkes BN und eines Filter IF wird bevorzugt.

### Literaturverzeichnis

- [1]: US Patent 3,117,317
- [2]: US Patent 4,132,991
- [3]: US Patent 4,521,778
- [4]: _{"}An Ultrasonic Sensor System for Location Gauging and Recognition of Small Workpieces" von Vossiek, M; Ermert, H.; Sensor 95.7 "Internat. Fachmesse mit Kongress für Sensoren, Messaufnehmer u. Systeme 1995"

## Patentansprüche

1. Multistatische Sensoranordnung für eine Entfernungsmessung zu einem Objekt, aufweisend eine Sende- (Tn) und eine Empfangseinheit (Rm), welche jeweils einen Hochfrequenzoszillator (HFO-Tn, HFO-Rm) und einen Pulsgenerator (PG-Tn, PG-Rm) aufweisen,
**dadurch gekennzeichnet,**
**dass** die Pulsgeneratoren (PG-Tn, PG-Rm) mit Taktsignalen (TS, RS) aus Signalgeneratoren speisbar sind, wobei die Taktsignale (TS, RS) über einen gemeinsamen Datenbus (B) an die Sende- (Tn) und die Empfangseinheit (Rm) übertragbar sind, wodurch ein deterministisches Phasenverhältnis der Hochfrequenzsignale aus den Hochfrequenzoszillatoren (HFO-Tn, HFO-Rm) erzeugbar ist.

2. Sensoranordnung nach Anspruch 1, **dadurch gekenn- zeichnet, dass** die Sende- und Empfangseinheiten jeweils Antennen (E^{Rm}, E^{Tn}) aufweisen.

3. Sensoranordnung nach einem der Ansprüche 1 oder 2, **dadurch gekennzeichnet, dass** die Empfangseinheit einen Mischer MIX aufweist.

4. Sensoranordnung nach einem der vorhergehenden Ansprüchen, **dadurch gekennzeichnet, dass** die Taktquellen an unterschiedlichen Positionen des Datenbusses angeordnet sind.

5. Sensoranordnung nach Anspruch 4, **dadurch gekenn- zeichnet, dass** die Taktquellen an den Enden des Datenbusses angeordnet sind.

6. Sensoranordnung nach einem der vorhergehenden Ansprüche, **dadurch gekennzeichnet, dass** die Sende- und Empfangseinheiten als LTCC-HF-Module aufgebaut sind.

7. Sensoranordnung nach einem der vorhergehenden Ansprüchen, **dadurch gekennzeichnet, dass** in der Empfangseinheit zusätzlich
- ein rauscharmer Verstärker und/oder
- ein Band-Pass Filter und/oder
- ein Hochfrequenzfilter und/oder
- ein Abtasthalteglied
mit den übrigen Komponenten verbunden sind.

8. Verfahren, insbesondere zum Betrieb der Sensoranordnung nach einem der Ansprüche 1 bis 7, bei dem ein Taktsignal aus einer Taktquelle (TS, RS) über einen gemeinsamen Datenbus B in eine Sende- und/oder in eine Empfangseinheit (Tn, Rm) eingespeist wird, und das Signal von einer Sendeeinheit zu einem Objekt (O) ausgestrahlt und das reflektierte Signal REF von einer Empfangseinheit mit einem Taktsignal gemischt wird, um daraus ein auswertbares Messsignal zu erzeugen, wobei eine Kalibrierung der Taktsignale anhand einer Nullpunktbestimmung der Taktsignale auf dem Signalbus ausgeführt wird, welche die Phasen zweier Taktsignale über den Datenbus vergleicht.

9. Verfahren nach Anspruch 8, bei dem ein Phasenvergleich anhand einer Probe an einer Stelle des Datenbusses B zur Bestimmung des Nullpunktes ausgeführt wird.

10. Verfahren nach einem Ansprüche 8 oder 9, bei dem der Nullpunkt durch einen Phasenvergleich zwischen zwei Taktsignalen ausgeführt wird, welche an zwei Enden des Datenbusses B eingespeist werden.

11. Verfahren nach einem der vorhergehenden Ansprüche, bei dem eine Kalibrierung der Taktsignale **dadurch** erreicht wird, dass ein Taktsignal im Datenbus über unterschiedliche Längen übertragen wird und anhand eines Vergleichs mit dem ursprünglichen Taktsignal ein Korrekturmaß geliefert wird.

12. Verfahren nach einem der vorhergehenden Ansprüche, bei dem ein Phasenvergleich mittels eines FLIP-FLOP erfolgt.

13. Verfahren nach einem der vorhergehenden Ansprüche, bei dem eine Sendeeinheit mittels der Steuereinheit über eine Multiplexer- Schaltung aktiviert wird.

14. Verfahren nach einem der vorhergehenden Ansprüche, bei dem alle Empfangseinheiten aktiviert werden, dass die von einem Objekt reflektierten Empfangsignale parallel empfangen werden.

## Claims

1. A multistatic sensor arrangement for measuring distance from an object, having a transmit unit (Tn) and a receive unit (Rm) unit, each of which has a high-frequency oscillator (HFO-Tn, HFO-Rm) and a pulse generator (PG-Tn, PG-Rm),
**characterised in that**
the pulse generators (PG-Tn, PG-Rm) can be supplied with clock signals (TS, RS) from signal generators, it being possible to transmit the clock signals (TS, RS) via a common data bus (B) to the transmit unit (Tn) and the receive unit (Rm), as a result of which a deterministic phase relationship can be generated for the high-frequency signals from the high-frequency oscillators (HFO-Tn, HFO-Rm).

2. The sensor arrangement according to claim 1, **characterised in that** the transmit and receive units each have antennae (E^{Rm}, E^{Tn}).

3. The sensor arrangement according to claim 1 or 2, **characterised in that** the receive unit has a mixer MIX.

4. The sensor arrangement according to one of the preceding claims, **characterised in that** the clock sources are arranged at different positions in the data bus.

5. Sensor arrangement according to claim 4, **characterised in that** the clock sources are arranged at the ends of the data bus.

6. Sensor arrangement according to one of the preceding claims, **characterised in that** the transmit and receive units are constructed as LTCC-HF modules.

7. Sensor arrangement according to one of the preceding claims, **characterised in that**
- a low-noise amplifier and/or
- a bandpass filter and/or
- a high-frequency filter and/or
- a sampling hold element
is/are connected to the other components in the receive unit.

8. Method, in particular for operating the sensor arrangement according to one of claims 1 to 7, in which a clock signal from a clock source (TS, RS) is supplied via a common data bus B to a transmit and/or receive unit (Tn, Rm) and the signal is emitted from a transmit unit to an object (O) and the reflected signal REF is mixed with a clock signal by a receive unit, in order to generate a measurement signal that can be evaluated therefrom, calibration of the clock signals being carried out on the signal bus based on determination of the zero point of the clock signals, comparing the phases of two clock signals via the data bus.

9. Method according to claim 8, in which a phase comparison is carried out based on a sample at one point of the data bus B to determine the zero point.

10. Method according to one of claims 8 or 9, in which the zero point is achieved by a phase comparison between two clock signals, which are supplied at two ends of the data bus B.

11. Method according to one of the preceding claims, in which calibration of the clock signals is achieved in that a clock signal is transmitted over different lengths in the data bus and a correction measure is provided based on a comparison with the original clock signal.

12. Method according to one of the preceding claims, in which a phase comparison takes place by means of a FLIP-FLOP.

13. Method according to one of the preceding claims, in which a transmit unit is activated by means of the control unit via a multiplexer circuit.

14. Method according to one of the preceding claims, in which all receive units are activated so that the receive signals reflected by an object are received in parallel.

## Revendications

1. Dispositif capteur multistatique pour une mesure de distance à un objet, présentant une unité d'émission (Tn) et une unité de réception (Rm), qui présentent respectivement un oscillateur à haute fréquence (HFO-Tn, HFO-Rm) et un générateur d'impulsions (PG-Tn, PG-Rm),
**caractérisé en ce que**
les générateurs d'impulsions (PG-Tn, PG-Rm) peuvent être alimentés avec des signaux de rythme (TS, RS) provenant de générateurs de signaux, les signaux de rythme (TS, RS) pouvant être transmis au moyen d'un bus de données (B) commun à l'unité d'émission (Tn) et à l'unité de réception (Rm), de sorte qu'un rapport de phase déterministe des signaux de haute fréquence peut être généré à partir des oscillateurs à haute fréquence (HFO-Tn, HFO-Rm).

2. Dispositif capteur selon la revendication 1, **caractérisé en ce que** les unités d'émission et de réception présentent chacune des antennes (E^{Rm}, E^{Tn}).

3. Dispositif capteur selon l'une quelconque des revendications 1 ou 2, **caractérisé en ce que** l'unité de réception présente un mélangeur MIX.

4. Dispositif capteur selon l'une quelconque des revendications précédentes, **caractérisé en ce que** les sources de rythme sont disposées en différentes positions du bus de données.

5. Dispositif capteur selon la revendication 4, **caractérisé en ce que** les sources de rythme sont disposées sur les extrémités du bus de données.

6. Dispositif capteur selon l'une quelconque des revendications précédentes, **caractérisé en ce que** les unités d'émission et de réception sont conçues comme des modules LTCC-HF.

7. Dispositif capteur selon l'une quelconque des revendications précédentes,
**caractérisé en ce que**, dans l'unité de réception, en supplément
- un amplificateur pauvre en bruit et/ou
- un filtre passe-bande et/ou
- un filtre de haute fréquence et/ou
- un échantillonneur-bloqueur
sont reliés aux autres composants.

8. Procédé, en particulier pour l'exploitation du dispositif capteur selon l'une quelconque des revendications 1 à 7, dans lequel un signal de rythme provenant d'une source de rythme (TS-RS) est injecté au moyen d'un bus de données B commun dans une unité d'émission et/ou dans une unité de réception (Tn, Rm), et le signal est émis d'une unité d'émission à un objet (O) et le signal REF réfléchi provenant d'une unité de réception est mélangé à un signal de rythme, afin de générer à partir de là un signal de mesure analysable, un étalonnage des signaux de rythme étant exécuté à l'aide d'un calcul du point zéro des signaux de rythme sur le bus de signal, lequel compare les phases de deux signaux de rythme au moyen du bus de données.

9. Procédé selon la revendication 8, dans lequel une comparaison de phase est effectuée à l'aide d'un échantillon en un endroit du bus de données B pour la détermination du point zéro.

10. Procédé selon la revendication 8 ou 9, dans lequel le point zéro est réalisé par une comparaison de phase entre deux signaux de rythme, lesquels sont injectés sur deux extrémités du bus de données B.

11. Procédé selon l'une quelconque des revendications précédentes, dans lequel un étalonnage des signaux de rythme est obtenu par le fait qu'un signal de rythme est transmis dans le bus de données au moyen de différentes longueurs et une mesure de correction est fournie à l'aide d'une comparaison avec le signal de rythme initial.

12. Procédé selon l'une quelconque des revendications précédentes, dans lequel une comparaison de phase s'effectue au moyen d'un FLIP-FLOP.

13. Procédé selon l'une quelconque des revendications précédentes, dans lequel une unité d'émission est activée au moyen de l'unité de commande par le biais d'un circuit multiplexeur.

14. Procédé selon l'une quelconque des revendications précédentes, dans lequel toutes les unités de réception sont activées, de sorte que les signaux d'émission réfléchis par un objet sont reçus en parallèle.
